# EUROPEAN PATENT APPLICATION

(11) **EP 0 588 620 A1**
(43) Date of publication of application: **23.03.1994**
(21) Application number: 93307277.9
(22) Date of filing: 15.09.1993
(51) Int. Cl.: B60G 7/04, F16F 1/36

(54) **Jounce bumpers**

(30) Priority: 15.09.1992 US 945043
(71) Applicant: GENCORP INC., Fairlawn, Ohio 44333-3300 (US)
(72) Inventor: Hein, Richard D., Wabash, Indiana 46992 (US)
(74) Representative: Stoner, Gerard Patrick

(57) **Abstract**

A resilient, elastomeric jounce bumper (20) is described as having a cylindrical head (21) which protrudes from a larger diameter cylindrical body (22) which has a cylindrical extension (29) which surrounds at least a portion of the head in spaced radial relation, such that an annular void (28) is formed around the head in the area of the body extension. The outer, free annular end (30) of the body extension (29) curves inwardly towards the head and terminates in close proximity to the head to prevent harmful particulate matter from entering the annular void. The body extension (29) is provided with at least one, circular metal ring (31) which is embedded in the extension adjacent the curved end of the extension to restrict radial expansion of the head, when the bumper is place under a heavy load.

## Description

This invention relates to a device for controlling relative deflections of mechanical parts in an automotive context, namely to a jounce bumper.

Jounce bumpers *per se* are well-known. Typically they are used in conjunction with an automobile suspension system. For example, while automotive suspension systems generally allow road wheels to move upwardly relative to a vehicle body, it is desirable to be able to limit the maximum upward displacement in an acceptable way to avoid undesirable impacts. Jounce bumpers are used for this purpose, at locations where two solid parts may otherwise collide when the suspension "jounces" i.e. moves upwardly relative to the vehicle body. Jounce bumpers may be mounted e.g. on suspension arms, chassis and body, chassis and lower control arm, or wherever appropriate in a given context. Commonly, the jounce bumper is a shaped elastomeric unit fitting onto a rigid projection e.g. a metal cap, which may form a location for the end ring of a spring.

The general aim herein is to provide novel jounce bumpers.

Some aspects of the invention are set out in the claims.

Alternatively stated, in a general aspect the invention provides a jounce bumper having the following elastomer portions:
an axially-projecting central impact-receiving or load-contacting head;
an axially-projecting retaining surround which extends up around the head, with a radial spacing between the head and the retaining surround, forming an annular void to accommodate radial expansion of the head when it is compressed axially under impact or load, and
a rigid ring incorporated in the elastomer of the retaining surround and extending around the head, at a location axially spaced from the base of the annular void, to restrict the degree of such radial expansion of the head.

Typically the head, retaining surround and ring have circular symmetry about the axis of the head. The head may be generally cylindrical. The retaining surround may have the form of a generally cylindrical upstanding collar.

The head may itself have a central void e.g. an axially-extending cylindrical void, to adjust its resilient response. Such a void is preferably vented, to above and/or below the head.

The head generally projects above the retaining surround i.e. the retaining surround is generally axially shorter than the head. Desirably the periphery of the retaining surround has an inturned flange which approaches the surface of the head, reducing the tendency for foreign particles to enter the annular void and perhaps detrimentally affect performance of the device. The rigid ring is suitably of metal. By "ring" is generally intended an object which is axially short compared with the axial extent of the retaining surround, as distinct from the metal sleeve described in our US-A-5149069 (not prior art) which has been found susceptible to being crushed or distorted under certain types of load. Typically, the ring cross-section may have comparable dimensions in the radial and axial diections e.g. a simple circular cross-section. More than one ring may be used, in axial series, with sufficient axial spacing between them (bridged by elastomer) to enable an independence of movement which helps to avoid permanent damage and deformation of the rings. Where the retaining surround has an inturned flange, a said ring may desirably be positioned adjacent the inturning.

Desirably the entire bumper is formed as an integral elastomeric unit in which the ring(s) is/are embedded. The typical conformation has a lower void centrally disposed beneath the head, to seat on a projection, such as a metal cap, on which the jounce bumper is mounted. The elastomer body may have an outwardly-extending radial flange around this central void, e.g. to define a seating for the end of a coil spring.

To minimise the undesirable trapping and compression of air in voids of the device, one or more vent apertures are desirably provided. For example, there may be one or more vent openings communicating from the base of the annular void through the device e.g. to the interior of the lower void where this is present. The lower, mounting void may have one or more wall grooves which define air passageways for venting in the mounted condition.

In one preferred aspect, the invention provides a resilient elastomeric jounce bumper which essentially comprises a cylindrical, load contacting head which protrudes from a larger diameter, cylindrical body which has a cylindrical extension which surrounds the head in spaced, radial relation, such that around the head is formed an annular void into which the head can expand when placed under load. The free outer annular end of the body extension curves inwardly towards the head and terminates in close proximity to the head in axial spaced relation from the outer, blunted end of the head. At least one, hollow, circular metal ring is embedded in the body extension to limit radial expansion of the head beyond filling of the annular void.

An embodiment of the invention is now described by way of example, with reference to the accompanying drawings in which:
Figure 1 is a plan view of a jounce bumper;
Figure 2 is a section of the bumper viewed from the line 2-2 of Figure 1; and
Figure 3 is a similar section of the bumper in assembled relation with a coil spring and under load.

### DETAILED DESCRIPTION OF THE DRAWING

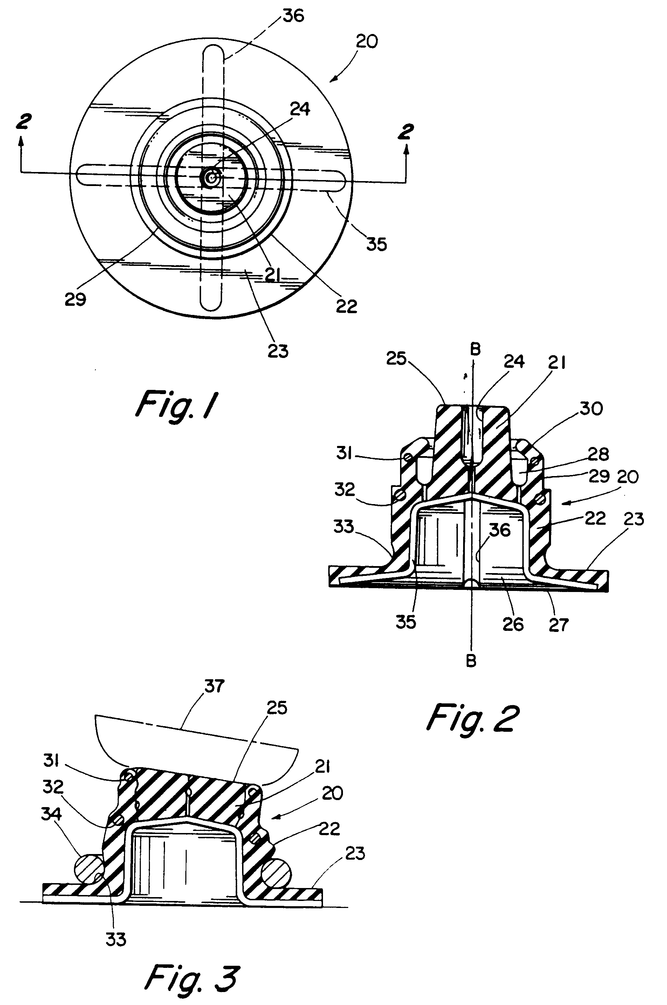

With general reference to the drawing for like parts and particular reference to Figure 2, there is shown a jounce bumper 20 which is composed of any suitable resilient elastomeric material, e.g. rubber. The bumper 20 includes a cylindrical, load contacting bumper head 21 which protrudes from a larger diameter, cylindrical body 22 which terminates at an even larger diameter, radially projecting annular flange 23 which is in a plane normal to the centre axis B-B of the bumper 20. A generally cylindrical centre void 24 extends vertically into the bumper head 21 from the outer, vertically uppermost, blunted top end 25 of the bumper head 21, when the centre axis B-B of the bumper 20 is vertically oriented, as will be assumed for purposes of this description. A larger diameter, generally cylindrical centre void 26 extends vertically inwardly of the bumper body 22 from the opposing, flared bottom end 27 of the bumper 20. The upper and lower voids 24,26 of the bumper head 21 and body 22, respectively, are in axially spaced back-to-back relation. Surrounding the bottom half of the bumper head 21 is an annular void 28 into which the bumper head 21 can expand when placed under load. A cylindrical extension 29 extends upwardly from the bumper body 22 in radial spaced relation from the bumper head 21 to form the annular void 28. The body extension 29 has an upper, annular free end 30 which curves inwardly towards the bumper head 21 and terminates in close proximity to the head 21 to prevent harmful particulate matter from entering the annular void 28.

A pair of similar, rigid, circular metal rings 31,32, is provided to restrict lateral or radial expansion of the bumper head 21 beyond closure of the annular void 28 by the bumper head 21 when under a heavy load, as seen in Fig. 3. The upper metal ring 31, closest the blunt top end 25 of the bumper head 21, is embedded in the body extension 29 adjacent or just below the upper curved end 30 of the body extension 29 and can be lighter than the lower, heavier ring 32 which is embedded in the bigger bumper body 22 adjacent, or just below the annular base of the body extension 29 connected to the bumper body 22. It can be appreciated that the upper and lower metal rings 31,32, because of their axial spacing, can move independently of each other so as to withstand, without damage, occasional skew loading which causes damage to the solid, cylindrical reinforcing sleeve of the jounce bumper of our US-A-5149069.

An annular seat 33 is formed at the outer juncture of the bumper body 22 with the annular flange 23 to receive a heavy coil metal spring 34 and is designed to compress the body radially inwards towards the void therein.

A pair or crosswise, intersecting air passageways 35,36 (Fig. 2) are provided to allow the escapement of any air trapped between the bumper 20 and adjacent metal cap (not shown) in the centre void 26 of the bumper body 22, when the bumper 20 is under load from, for example, a contacting cap 37 which is part of the automobile frame or chassis.

The volume of the annular void 28 is designed to correspond to the displacement of the bumper head 21 under maximum loading conditions, after which the bumper head 21 is restricted from further lateral or radial expansion by the surrounding metal rings 31,32. The upper free end 30 of the body extension is designed to protect the annular void 28 from particulate matter which might adversely effect the deformation of the bumper head 21 under load. The top centre void 24 acts to soften the initial load characteristics of the bumper head 20, and provide a smooth, gradual transition between the initial and maximum load dampening characteristics of the bumper 20.

Thus, there has been described a useful jounce bumper assembly, wherein the axial movement of the bumper in response to a heavy load is restricted by restraining the lateral or radial expansion of the bumper head using a pair of axially spaced hollow, metal reinforcement rings or hoops to optimize the maximum load dampening characteristics of the bumper. The bumper head is given space to expand radially by the provision of a surrounding annular void whose volume is correlated to the displacement of the bumper head under a predetermined load.

## Claims

1. A jounce bumper, comprising:
a) a generally cylindrical, resilient elastomeric head protruding from an integral, larger diameter, generally cylindrical elastomeric body, the head and body having centrally disposed voids extending therein towards each other so as to be in back-to-back spaced relation, the body terminating in axial spaced relation from the head at an even larger diameter, outstanding elastomeric flange;
b) an integral, generally cylindrical elastomeric extension of the body extending from the body and flange in surrounding, spaced relation around the head and forming an annular void around the head, the extension having a free outer end which curves inwardly towards the head and terminates in close proximity to the head in spaced axial relation from a free outer end of the head opposite the annular flange; and
c) at least one, rigid, hollow circular ring embedded in the elastomeric material of the body extension to restrict radial expansion of the head in the direction of the extension.

2. The jounce bumper of claim 1, which includes a second, rigid, hollow circular ring embedded in the elastomeric material of the body adjacent the extension.

3. The jounce bumper of claim 2, wherein the at least one ring embedded in the extension is located adjacent the curved end of the extension.

4. The jounce bumper of claim 3, wherein the elastomeric material is rubber.

5. The jounce bumper of claim 4, wherein the rigid rings are metal rings.

6. The jounce bumper of claim 5, wherein the second ring is bigger than the ring in the body extension.

7. The jounce bumper of claim 3, wherein an annular seat is formed between the body and annular flange to receive a metal coil spring, to compress the body radially inwardly towards the void therein.

8. The jounce bumper of claim 3, which includes a plurality of air passageways formed in the surface of at least the portion of the body confronting the void therein.
